# EUROPÄISCHE PATENTANMELDUNG

(11) **EP 4 585 783 A1**
(43) Veröffentlichungstag der Anmeldung: **16.07.2025**
(21) Anmeldenummer: 24221738.8
(22) Anmeldetag: 19.12.2024
(51) Int. Cl.: E06B 3/30, B29C 65/00

(54) **VERFAHREN ZUR HERSTELLUNG EINES VERBUNDPROFILS UND VERBUNDPROFIL**

(30) Priorität: 10.01.2024 DE 102024100547
(71) Anmelder: SCHÜCO International KG, 33609 Bielefeld (DE)
(72) Erfinder: TRAPP, Jörg, 53639 Königswinter (DE); JENTSCH, Thomas, 06386 Quellendorf (DE); FISCHER, Christian, 06114 Halle (DE); REIßENWEBER, Dirk, 96237 Ebersdorf (DE)
(74) Vertreter: Dantz, Jan Henning

(57) **Zusammenfassung**

Ein Verfahren zur Herstellung eines Verbundprofils (1) umfasst die folgenden Schritte:
- Abwickeln eines Metallbleches von einem Coil;
- Zuführen des Metallbleches zu einem Extrusionswerkzeug zur Extrusion einer Kunststoffschicht (5), und
- Durchführen des Metallbleches mit dem Kunststoff durch eine Düse des Extrusionswerkzeuges und Verbinden des Metallbleches mit der Kunststoffschicht (5), wobei auf das Metallblech vor dem Zuführen zu dem Extrusionswerkzeug ein Haftvermittler aufgebracht wird und das Metallblech mit der Kunststoffschicht (5) nach dem Verlassen der Düse des Extrusionswerkzeuges über ein Reibschweißen an einem Kunststoffprofil (2) fixiert wird. Zudem wird auch ein Verbundprofil (1) mit einem extrudierten Kunststoffprofil (2) und mindestens einem metallischen Abdeckprofil (3, 4) aus einem Metallblech bereitgestellt.

## Beschreibung

Die vorliegende Erfindung betrifft ein Verfahren zur Herstellung eines Verbundprofils und ein Verbundprofil mit einem extrudierten Kunststoffprofil und mindestens einem metallischem Abdeckprofil aus einem Metallblech mit einer Kunststoffschicht.

In der DE 10 2021 132 878 A1 ist eine Rahmenprofilanordnung für einen Fenster- oder Türrahmen offenbart, bei dem an einem Trägerprofil aus Kunststoff eine Aluminiumabdeckung befestigt ist. Die Aluminiumabdeckung ist an dem Kunststoffprofil verrastet oder verklebt, so dass eine Außenseite des Profils eine erhöhte Witterungsbeständigkeit aufweist. Das Aufbringen der Aluminiumabdeckung ist in der Montage vergleichsweise aufwendig und erfordert einen zusätzlichen Arbeitsschritt. Zudem unterliegt die Verbindung zwischen dem Metallprofil und dem Kunststoffprofil mechanischen Belastungen durch Temperaturänderungen, was zu Spannungen führen kann (Bimetalleffekt).

In der GB 1,140,261 A offenbart die Herstellung eines Verbundprofils, bei dem das Zuführen eines gelochten Metallbleches durch Rollformen erfolgt, das dann einem Extrusionswerkzeug zugeführt wird und allseitig in Kunststoff eingebettet wird. Das Metallblech ist als inneres Verstärkungsprofil ausgebildet und das Kunststoffmaterial fließt in die Löcher des Metallbleches und füllt diese aus.

Zur Anbringung einer Metallfolie an einer Außenseite eines Kunststoffprofils ist es zudem aus der EP 3 885 523 A1 bekannt, das Kunststoffprofil mit einem Primer und einem Klebstoff zu beschichten, um dann die Mettallfolie mit einem Haftgrund auf den Klebstoff aufzubringen, um die Metallfolie dauerhaft an dem Kunststoffprofil festzulegen.

EP 0 052 207 A2 offenbart ein Kunststoff-Metall-Verbundprofil, bei dem zwischen einer Kunststoffoberfläche und einer Metalloberfläche Metalldrähte oder andere Gebilde aus Metall eingebracht sind.

Es ist daher Aufgabe der vorliegenden Erfindung ein Verfahren zur Herstellung eines Verbundprofils und ein Verbundprofil zu schaffen, bei dem eine verbesserte Verbindung zwischen einem Kunststoffprofil und einem Metallblech erhalten wird.

Diese Aufgabe wird mit einem Verfahren zur Herstellung eines Verbundprofils mit den Merkmalen des Anspruchs 1 und einem Verbundprofil mit den Merkmalen des Anspruches 9 gelöst.

Bei dem erfindungsgemäßen Verfahren zur Herstellung eines Verbundprofils wird ein Metallblech von einem Coil abgewickelt, wobei das Metallblech ein Stahlblech, ein Aluminiumblech oder ein anderes metallisches Blech ist, das insbesondere streifenförmig abgewickelt wird. Das Metallblech wird dann zu einem Extrusionswerkzeug zur Extrusion eines Kunststoffschicht zugeführt und mit dem Kunststoff durch eine Düse des Extrusionswerkzeuges durchgeführt, wobei das Metallblech mit der Kunststoffschicht fest verbunden wird. Durch das Durchführen des Metallbleches durch die Düse des Extrusionswerkzeuges haftet das Metallblech an dem Kunststoffprofil an, so dass keine weiteren Befestigungsschritte notwendig sind. Dies vereinfacht die Herstellung und zudem können auch sehr dünne Metallbleche effektiv verarbeitet werden. Das Metallblech kann die Kunststoffschicht mechanisch verstärken.

Das Metallblech wird nach dem Abwickeln und vor dem Zuführen zu dem Extrusionswerkzeug bevorzugt durch mindestens ein Rollwerkzeug zu einem Abdeckprofil verformt. Über das Rollwerkzeug kann an dem Metallblech an mindestens einer Seite eine Abwinklung oder eine andere Profilierung, beispielsweise eine Wölbung, eine Nut hergestellt werden. Optional können die beiden gegenüberliegenden freien Kanten des Metallbleches abgewinkelt werden, so dass die sichtbare Außenseite des so hergestellten Verbundprofils keine scharfen Kanten enthält. Die Düse kann dabei im Wesentlichen die gleiche Querschnittsform wie das rollgeformte Metallblech besitzen. Die Dicke der Kunststoffschicht kann dabei beispielsweise in einem Bereich zwischen 0,1mm bis 10mm betragen. Dabei kann die Kunststoffschicht eine ebene Oberfläche umfassen. Bevorzugt weist diese Oberfläche aber Erhebungen durch Verdickungen auf, die für ein späteres Reibschweißen genutzt werden.

Optional kann das Metallprofil pulverbeschichtet oder nasslackiert, eloxiert oder blank sein.

Auf das Metallblech wird vor der Zuführung zu dem Extrusionswerkzeug ein Haftvermittler mit Klebeeigenschaften aufgebracht. Der Haftvermittler kann dabei kurz vor dem Extrusionswerkzeug aufgebracht werden oder schon bei der Herstellung des Coils. Der Haftvermittler kann dabei den gleichen Kunststoff enthalten wie das Kunststoffprofil. Wenn das Kunststoffprofil als PVC-Kunststoffprofil ausgebildet ist, kann der Haftvermittler PVC enthalten. Unter dem hohen Druck der Extrusionsdüse entsteht dabei eine ausreichende Haftung zwischen dem Kunststoffprofil und dem Metallblech durch den Haftvermittler. Optional kann der Haftvermittler auch den Kunststoff ABS enthalten. Der Haftvermittler kann dabei in linienförmig oder flächig nach dem Abwickeln des Metallbleches und vor der Zuführung des Metallbleches zu dem Extrusionswerkzeug aufgebracht werden. Optional kann in der Extrusionsdüse eine Schutzfolie auf das Metallblech aufextrudiert werden, um eine Beschädigung der äußeren Oberfläche, die die spätere Profilsichtfläche bildet, zu vermeiden.

Das Metallblech mit der Kunststoffschicht kann nach dem Verlassen der Düse des Extrusionswerkzeuges abkühlen und dann erfindungsgemäß über Reibschweißen an dem Kunststoffprofil fixiert werden. Durch ein solches Schweißverfahren wird kein zusätzlicher Klebstoff benötigt, so dass im Wesentlichen nur zwei Materialien vorgesehen sind, das Metallblech und das Kunststoffprofil, was ein späteres Recycling vereinfacht.

In einer bevorzugten Ausgestaltung wird auf das Metallblech nach dem Abwickeln eine Schutzfolie vor oder in der Extrusionsdüse auf eine Seite aufgebracht. Die Schutzfolie kann an einer späteren Außenseite des Verbundprofils vorgesehen sein, während an einer Innenseite vorzugsweise ein Haftvermittler aufgebracht wird, um die Verbindung mit dem Kunststoffprofil zu verbessern.

Erfindungsgemäß umfasst das Verbundprofil ein extrudiertes Kunststoffprofil und mindestens ein metallisches Abdeckprofil aus einem Metallblech mit einer Kunststoffschicht, die an dem Kunststoffprofil angeschweißt ist. Das Abdeckprofil ist erfindungsgemäß durch ein Reibschweißen an dem Kunststoffprofil angeschweißt sein, was zu einer besonders dauerhaften und festen Verbindung führt.

In einer bevorzugten Ausgestaltung weist das Abdeckprofil aus Metall eine Dicke zwischen 0,1 mm bis 2,5 mm, insbesondere 1,2 mm bis 1,5 mm auf. Sofern das metallische Abdeckprofil nur aus optischen Gründen für die Farbgebung eingesetzt wird, kann die Dicke des Metallbleches auf einen Bereich zwischen 0,1 mm bis 0,4 mm reduziert werden. Sofern das Abdeckprofil auch statische Aufgaben übernehmen soll, ist eine Dicke des Abdeckprofils von 0,8 mm bis 1,4 mm vorteilhaft.

Das Abdeckprofil weist vorzugsweise einen winkelförmigen Abschnitt auf, wobei die freien Kanten des Abdeckprofils vorzugsweise beide gegenüber einer Hauptfläche abgewinkelt angeordnet sind und die Hauptfläche die spätere Außenseite des Verbundprofils bildet. Optional kann auch an gegenüberliegenden Seiten jeweils ein Abdeckprofil an dem Kunststoffprofil fixiert werden.

Das Abdeckprofil ist vorzugsweise über einen Haftvermittler mit der Kunststoffschicht verbunden, wobei der Haftvermittler einen Kunststoff enthalten kann, der auch in der Kunststoffschicht enthalten ist, was die Qualität der Verbindung verbessert.

Ein so hergestelltes Verbundprofil wird vorzugsweise zur Herstellung eines Rahmens für Fenster oder Türen oder für eine Fassadenkonstruktion an einem Gebäude verwendet.

Die Erfindung wird nachfolgend anhand eines Ausführungsbeispiels mit Bezug auf die beigefügten Zeichnungen näher erläutert. Es zeigen:
- Fig 1: eine Schnittansicht durch ein erfindungsgemäßes Verbundprofil; und
- Fig. 2: eine Detailansicht des Verbundprofils der Figur 1.

Ein Verbundprofil 1 umfasst ein Kunststoffprofil 2, an dem an einer ersten Seite ein Abdeckprofil 3 und an einer gegenüberliegenden zweiten Seite ein weiteres Abdeckprofil 4 aus Metall fixiert ist. Die beiden Abdeckprofile 3 und 4 sind jeweils über eine Schicht eines Haftvermittlers und einer Kunststoffschicht 5 mit dem Kunststoffprofil 2 verbunden.

Das Kunststoffprofil 2 ist ein Extrusionsprofil und umfasst eine Vielzahl von Hohlkammern 8 zwischen den beiden Abdeckprofilen 3 und 4, was die Wärmedämmung verbessert. Zudem sind an Nuten des Kunststoffprofils 2 zwei Dichtprofile 6 und 7 fixiert, beispielsweise Dichtprofile 6 und 7 zur Anlage an einer Isolierglasscheibe oder eines anderen Füllungselementes. Die Dichtprofile 6 und 7 decken vorzugsweise auch eine Schnittkante des Abdeckprofils 3 ab.

Die beiden Abdeckprofile 3 und 4 sind aus einem Metallblech, insbesondere einem Stahlblech oder einem Aluminiumblech hergestellt und weisen eine Dicke zwischen 0,1 bis 2,5 mm, insbesondere 0,2 - 1,5 mm auf. Die Abdeckprofile 3 und 4 können beschichtet sein, beispielsweise pulverbeschichtet für ein optisch ansprechendes Erscheinungsbild.

Zur Herstellung des Verbundprofils 1 wird ein Metallblech von einem Coil abgewickelt. Das Metallblech ist streifenförmig ausgebildet und kann in einem ersten Schritt zu einem optionalen Rollwerkzeug zugeführt werden. An dem Rollwerkzeug kann das Metallblech profiliert werden, insbesondere kann eine Abwicklung an einer Längskante oder beiden Längskanten des Metallbleches vorgesehen werden. Das Abdeckprofil 3 weist an beiden Längskanten eine Abwinklung auf, während das Abdeckprofil 4 nur eine Abwinklung aufweist.

In einem nächsten Schritt wird ein Haftvermittler auf das Metallblech aufgebracht, insbesondere ein kunststoffhaltiger Haftvermittler, der beispielsweise ABS und/oder PVC enthält.

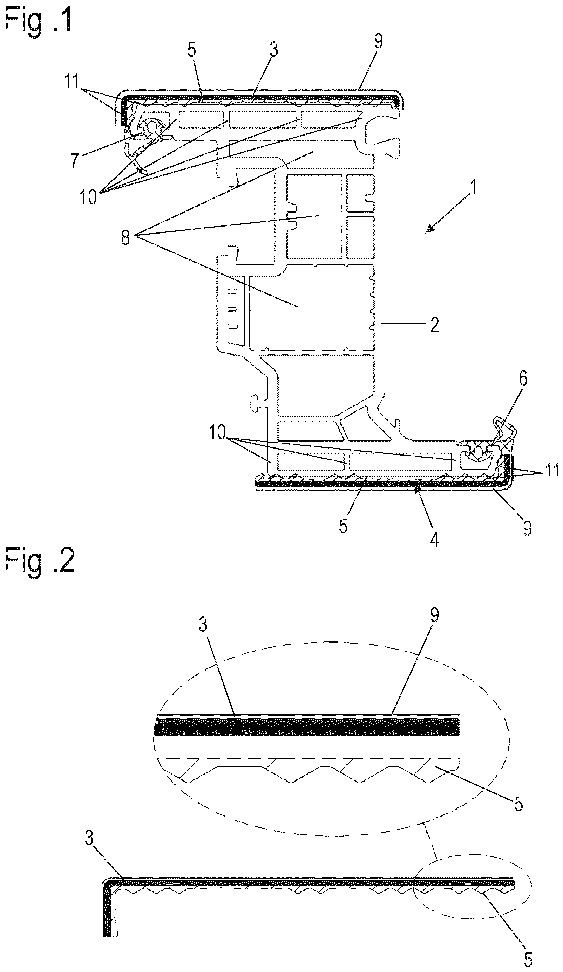

Wie in Figur 2 gezeigt ist, kann das gerollformte Abdeckprofil 3 mit dem Haftvermittler beschichtet werden, der auf der zu der Schutzfolie 9 gegenüberliegende Seite aufgebracht wird. Die Schutzfolie 9 wird vorzugsweise im Extrusionswerkzeug aufextrudiert. Das so verformte Metallblech, das mit dem Haftvermittler und vorzugsweise mit der Schutzfolie 9 beschichtet ist, wird nun zu einem Extrusionswerkzeug zugeführt, das zur Herstellung einer Kunststoffschicht geeignet ist und eine Förderschnecke für das geschmolzene Kunststoffmaterial aufweist, das zu einer Extrusionsdüse zugeführt wird. Auch das beschichtete und gebogene Metallblech wird der Extrusionsdüse zugeführt, damit das Metallblech zusammen mit dem Kunststoff durch die Düse des Extrusionswerkzeuges durchgeführt wird, um das Metallblech mit der Kunststoffschicht 5 zu verbinden. Die Düse besitzt dabei im Wesentlichen die gleiche Querschnittsgeometrie wie das rollgeformte Metallblech.

In einem nächsten Schritt wird dann die Kunststoffschicht mit dem Kunststoffprofil 2 verbunden. Nach dem Extrusionswerkzeug wird das Metallblech mit der Kunststoffschicht 5 abgekühlt. Dann wird nach dem Extrusionswerkzeug ein weiterer Fertigungsschritt durchgeführt, in dem das Kunststoffprofil 2 mit der Kunststoffschicht 5 an dem Abdeckprofil 3 verschweißt wird, insbesondere durch Reibschweißen, damit die Verbindung zwischen dem Abdeckprofil 3 und dem Kunststoffprofil 2 mit hoher Festigkeit bereitgestellt wird. Zur Herstellung des Verbundprofils 1 nach Figur 1 werden zwei Abdeckprofile 3 und 4 an dem Kunststoffprofil 2 fixiert, wobei es natürlich auch möglich ist, nur ein einziges Abdeckprofil 3 oder mehr als zwei Abdeckprofile 3 an dem Kunststoffprofil 2 zu fixieren.

Die Kunststoffschicht 5 an dem hinterspritzten Abdeckprofils 3 ist nicht vollständig eben ausgebildet, sondern hat im Bereich der Stege des Kunststoffprofils 2 Nocken oder Erhöhungen, die für das nachfolgende Reibschweißen vorteilhaft sind. Die Erhöhungen sind durch eine größere Materialdicke gebildet und sind an inneren Stegen 10 des Kunststoffprofils 2 positioniert, um die Kraftübertragung durch Druck und Gegendruck beim Reibschweißen für die Erwärmung und Plastifizierung der Materialien zu ermöglichen. In den Bereichen, in denen das Kunststoffprofil 2 keine Stege 10 hat kann die Kunststoffschicht 5 bevorzugt keine Nocken aufweisen, um das darunterliegen Material des Kunststoffprofils 2 zu schonen. Die Stege 10 verlaufen bevorzugt parallel zur Längsrichtung des Kunststoffprofils und im Wesentlichen senkrecht zur Ebene des Abdeckprofils 3.

Die Geometrie der Nocken ist so gewählt, dass sie die möglichen Temperaturen von 140°C bis 180°C, die beim Beschichten der Metalloberfläche entstehen, insbesondere für die Farbgebung, möglichst verzugsfrei überstehen. Die Nocken sind weiterhin so gestaltet, dass sie die zulässigen Form- und Lagetoleranzen bei der Profilextrusion bei einem möglichen Schweißvorgang ausgleichen können.

Der Abstand der einzelnen Nocken muss so gewählt werden, dass ein möglicher Schweißabbrand (Flocken) ausreichend Platz hat. Liegen am Abdeckprofil Nocken 11 nicht auf einer Ebene bzw. stehen die Nocken zur langen Seite des Abdeckprofils zu einem bestimmten Winkel, ist die Geometrie an dem Kunststoffprofil 2 so zu wählen, dass alle Nocken beim Verschweißen gleichzeitig anliegen.

Das so hergestellte Verbundprofil 1 wird vorzugsweise zur Herstellung von Rahmen für Fenster oder Türen verwendet oder für Fassadenkonstruktionen, beispielsweise für Pfosten-Riegel-Konstruktionen oder Elementfassaden.

### Bezugszeichenliste

- 1: Verbundprofil
- 2: Kunststoffprofil
- 3: Abdeckprofil
- 4: Abdeckprofil
- 5: Kunststoffschicht
- 6: Dichtprofil
- 7: Dichtprofil
- 8: Hohlkammern
- 9: Schutzfolie
- 10: Steg
- 11: Nocken

## Patentansprüche

1. Verfahren zur Herstellung eines Verbundprofils (1) mit den folgenden Schritten:
- Abwickeln eines Metallbleches von einem Coil;
- Zuführen des Metallbleches zu einem Extrusionswerkzeug zur Extrusion einer Kunststoffschicht (5), und
- Durchführen des Metallbleches mit dem Kunststoff durch eine Düse des Extrusionswerkzeuges und Verbinden des Metallbleches mit der Kunststoffschicht (5),
**dadurch gekennzeichnet, dass** auf das Metallblech vor dem Zuführen zu dem Extrusionswerkzeug ein Haftvermittler aufgebracht wird und das Metallblech mit der Kunststoffschicht (5) nach dem Verlassen der Düse des Extrusionswerkzeuges über ein Reibschweißen an einem Kunststoffprofil (2) fixiert wird.

2. Verfahren nach Anspruch 1, **dadurch gekennzeichnet, dass** das Metallblech nach dem Abwickeln und vor dem Zuführen durch mindestens ein Rollwerkzeug zu einem Abdeckprofil (3, 4) verformt wird.

3. Verfahren nach Anspruch 2, **dadurch gekennzeichnet, dass** durch das Rollwerkzeug an mindestens einer Seite eine Abwinklung an dem Metallblech hergestellt wird.

4. Verfahren nach Anspruch 2 oder 3, **dadurch gekennzeichnet, dass** die Düse im Wesentlichen die gleiche Querschnittsform wie das rollgeformte Metallblech hat.

5. Verfahren nach einem der vorhergehenden Ansprüche, **dadurch gekennzeichnet, dass** der Haftvermittler den gleichen Kunststoff enthält wie die Kunststoffschicht (5).

6. Verfahren nach einem der vorhergehenden Ansprüche, **dadurch gekennzeichnet, dass** die Kunststoffschicht (5) eine Dicke zwischen 0,1 mm bis 10mm aufweist.

7. Verfahren nach einem der vorhergehenden Ansprüche, **dadurch gekennzeichnet, dass** die Kunststoffschicht (5) Erhebungen aufweist, die beim Reibschweißen im Bereich von stützenden Stegen an dem Kunststoffprofil (2) angeordnet werden.

8. Verfahren nach einem der vorhergehenden Ansprüche, **dadurch gekennzeichnet, dass** auf das Metallblech nach dem Abwickeln eine Schutzfolie (9) auf einer Seite aufgebracht wird.

9. Verbundprofil (1) mit einem extrudierten Kunststoffprofil (2) und mindestens einem metallischen Abdeckprofil (3, 4) aus einem Metallblech mit einer Kunststoffschicht (5), **dadurch gekennzeichnet, dass** das Abdeckprofil (3, 4) über einen Haftvermittler (5) mit der Kunststoffschicht (5) verbunden ist und das mindestens eine metallische Abdeckprofil (3, 4) mit der Kunststoffschicht (5) an dem Kunststoffprofil (2) durch Reibschweißen angeschweißt ist.

10. Verbundprofil nach Anspruch 9, **dadurch gekennzeichnet, dass** das Abdeckprofil (3, 4) eine Dicke zwischen 0,1 bis 2,5 mm, insbesondere 0,2 mm bis 1,5 mm aufweist.

11. Verbundprofil nach Anspruch 9 oder 10, **dadurch gekennzeichnet, dass** das Abdeckprofil (3, 4) einen winkelförmigen Abschnitt aufweist.

12. Verwendung eines Verbundprofils nach einem der Ansprüche 9 bis 11 zur Herstellung eines Rahmens für Fenster oder Türen oder für eine Fassadenkonstruktion an einem Gebäude.
